# EUROPEAN PATENT APPLICATION

(11) **EP 0 576 803 A1**
(43) Date of publication of application: **05.01.1994**
(21) Application number: 93107299.5
(22) Date of filing: 05.05.1993
(51) Int. Cl.: G11B 5/60

(54) **Air bearing magnetic head slider**

(30) Priority: 29.06.1992 US 905675
(71) Applicant: READ-RITE CORPORATION, Milpitas California 95035 (US)
(72) Inventor: Murray, Stephen S., Fremont, California 94555 (US)
(74) Representative: Tiedtke, Harro, Dipl.-Ing.

(57) **Abstract**

An air bearing magnetic head slider has two air bearing rails, each configured with a narrowed or ablated region disposed between front and rear rail sections. The width of the rail sections is substantially the same as the width of tapers formed at the leading edge of the slider. The reduction in air bearing surface of the rails resulting from the narrowed rail regions cause the head to fly closer to the rotating disk surface. The width of the rear rail section accommodates a transducer coil without reducing the number of coil turns typically used in a thin film transducer. The angles between the end sections and the narrowed regions are less than 90° so that no sharp corners are formed to trap particles.

## Description

### Field of the Invention

This invention relates to an air bearing magnetic head slider.

### Background of the Invention

Magnetic recording heads used in disk files typically incorporate air bearing sliders carrying magnetic transducers that fly over the surface of a magnetic disk for transducing data signals. One objective for improving the transducing relationship between a magnetic transducer and a magnetic disk is to provide a close spacing between the transducer and the disk. Another objective is to maintain a substantially constant spacing and stable flying height between the transducer and the disk.

When used with very narrow transducing gaps and very thin magnetic record films, the close spacing allows short wavelength, high frequency signals to be recorded, thereby affording high density, high storage capacity recording. To obtain the desired close spacing, the flying height of the air bearing slider may be lowered by increasing the gram load force that is applied to the head assembly, or by decreasing the rotational velocity of the disk, or by decreasing the width and air bearing surface area of the slider rails to reduce the air lift of the slider. However, if the applied load force is increased, a higher starting torque is required for liftoff of the head, during operation of the disk drive. On the other hand, if the rotational velocity of the disk is decreased, data access time is increased accordingly which reduces system performance. Therefore these two approaches are undesirable and generally not implemented.

The third approach of reducing the width of the slider rails is limited to the size and width of the thin film transducer that needs to be deposited at the trailing edge of the slider at the end of the rail. During production of head sliders on which one or more magnetic transducers are deposited, it is desirable to make the transducer coil with at least a number of turns that would provide a significant reduction in electrical resistance, therby resulting in an improved recording signal. The number of coil turns per coil layer in effect determines the width of the coil and the necessary minimum width of the rail end on which the transducer is deposited.

Other considerations in the design of an air bearing slider are control of pitch and roll, including roll stiffness, in order to avoid head crashes and undue wear of the head and disk. Another consideration is to avoid having sharp corners on the air bearing surface of a head slider which may entrap particles present in the head/disk assembly (HDA) that would adversely affect the performance of the magnetic head.

### Summary of the Invention

An object of this invention is to provide an air bearing slider configuration that allows flying a magnetic head very close to a rotating disk surface at a substantially constant spacing.

Another object of this invention is to provide an air bearing slider having controlled roll stiffness and pitch.

Another object is to provide an air bearing slider that avoids the problem of particle entrapment in the air bearing surface of the head slider.

In accordance with this invention, an air bearing magnetic head slider is configured with two side rails, each of which is ablated or narrowed over an extended central region along its length. The ablated region is disposed between two short rail end sections, front and rear, which have substantially the same width as the leading edge tapers. One end of each front rail section abuts its respective taper and the other end of the front rail section is adjacent to the front portion of the ablated region of the rail. The rear rail sections extend from the rear portion of the ablated rail regions to the trailing edge of the slider. The rear rail sections are of sufficient width at the trailing edge to accommodate the desired width of a transducer and its coil. The reduction in width of the ablated rail region along a major portion of the rails effectively enables a substantial lowering of the flying height of the slider. In addition, the configuration of the ablated rails of the head slider allows the head to operate with controlled pitch and roll stiffness and affords a substantially constant flying height.

### Brief Description of the Drawing

The invention will be described in greater detail with reference to the drawings in which:
Figure 1 is an isometric plan view illustrating the head slider, made in accordance with this invention;
Figure 2 is a top plan view representation of the air bearing surface of the head slider of Fig. 1; and
Figure 3 is a plot of flying height against disk radius showing the performance of an air bearing slider configured in accordance with this invention.

### Detailed Description of the Invention

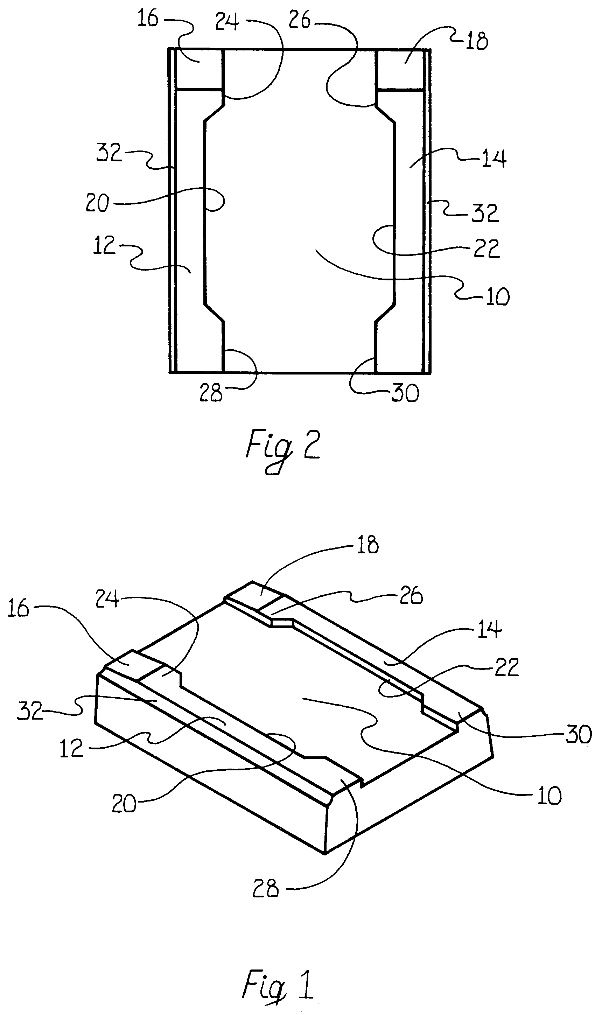

As illustrated in Figs. 1 and 2, an air bearing magnetic head slider 10 formed of a ceramic material is configured with two rails 12 and 14. Tapers 16 and 18 are provided at the leading edge of the slider 10. In keeping with this invention, the flat rails 12 and 14 respectively have ablated or narrowed regions 20 and 22 of constant width that are formed between end sections 24 and 28 of the rail 12 and between end sections 26 and 30 of rail 14. The rail configuration is achieved by removing rail material between the end sections of the rail. The front rail sections 24 and 26 and rear rail sections 28 and 30 thus have substantially the same width as the tapers 16 and 18. The configured rails are formed by photolithographic masking and reactive ion etching or ion milling, or alternatively by a laser using an X-Y positioner. With the present design, the width of the electrical coil of a thin film transducer, which is deposited on the trailing edge surface perpendicular to the air bearing surface of the rail, can be accommodated by the width of the rear end rail sections 28 and 30. The slider configuration described herein allows significant narrowing of a large portion of the longitudinal flat rails and yet enables the use of a wide transducer coil having an increased number of turns. Thus the electrical resistance of the coil can be reduced with an accompanying increase in signal amplitude and an improvement in signal-to-noise ratio.

Peripheral portions 32 and 34 of the slider 10 adjacent to each rail 12 and 14 respectively are cut to provide a step or recess along the length of the slider to improve air lift pressure distribution. During operation of the air bearing slider in a disk drive, control of pitch and roll stiffness of the slider are increased and control of the flying attitude of the air bearing head slider is improved.

In implementing this invention, a nanoslider with two flat rails is configured by reactive ion etching and mechanical cutting or sawing. The conventional length of the nanoslider is about 0.080 inch, its width about 0.063 inch and its height about 0.017 inch. The length of each taper 16 and 18 from the leading edge of the slider is about 0.007 inch and the degree of taper angle is approximately 20-90 minutes. Prior to ablation of the rails 12 and 14, the width of the rails is in the range of about 6-16 milli-inches. The ablated rail regions 20 and 22 are narrowed to about 25-75% of the original full width of the rails. The angles of the etches or cuts, α and β, are virtually the same, although angled in opposing directions. The angles are made to be less than 90°, and preferably in the range of 30-80°, as illustrated in Fig. 2.

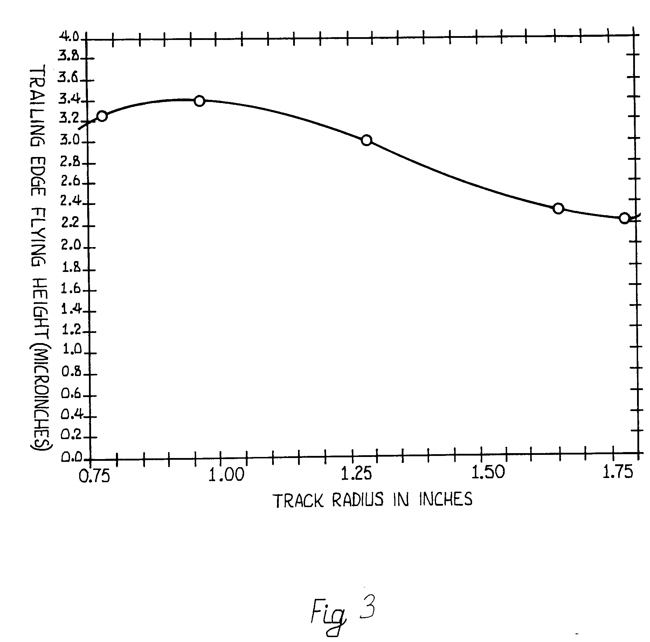

With a disk spinning at about 7,200 rpm (revolutions per minute), a nominal flying height of about 1.0 to 2.0 microinches above the disk surface can be realized using a head slider with the design of this invention. In one implementation, a flying height in the range of about 2.4 to 3.3 microinches was achieved, as shown in Fig. 3. The slider operates at a higher pitch which allows a relatively fast liftoff from the disk. The slider is able to fly at a lowered height with a substantially constant spacing between the head and the disk. The rails have angles below a sharp 90°, between the rail end sections and the ablated rail regions, so that particle entrapment is eliminated.

An air bearing magnetic head slider has two air bearing rails, each configured with a narrowed or ablated region disposed between front and rear rail sections. The width of the rail sections is substantially the same as the width of tapers formed at the leading edge of the slider. The reduction in air bearing surface of the rails resulting from the narrowed rail regions cause the head to fly closer to the rotating disk surface. The width of the rear rail section accommodates a transducer coil without reducing the number of coil turns typically used in a thin film transducer. The angles between the end sections and the narrowed regions are less than 90° so that no sharp corners are formed to trap particles.

## Claims

1. An air bearing magnetic head slider comprising:
a substrate having an air bearing surface and a leading edge and a trailing edge;
first and second tapers extending from said leading edge, said tapers having a defined constant width;
first and second longitudinal rails extending from said tapers to said trailing edge, each rail configured with a relatively short section following said taper and a relatively short section adjacent to said trailing edge, said short sections being substantially of the same width and the same length, each of said rails having an ablated region of constant width between said sections so that the flying height of said slider relative to a rotating disk is lowered.

2. An air bearing magnetic head slider as in Claim 1, wherein said sections have a width substantially similar to the defined constant width of said tapers

3. An air bearing magnetic head slider as in Claim 1, wherein the peripheral sides of said slider include a longitudinal recess or step adjacent to said rails extending from said leading edge to said trailing edge.

4. An air bearing magnetic head slider as in Claim 1, wherein the air bearing surfaces of said rails are substantially flat.

5. An air bearing magnetic head slider as in Claim 1, wherein the angle defined between said rail end sections and said ablated regions is in the range of 30-80°.

6. An air bearing magnetic head slider as in Claim 1, wherein the angle of said taper surface is in the range of 20-90 minutes.

7. An air bearing magnetic head slider as in Claim 1, wherein said ablated region is etched, milled or laser cut.
